# EUROPÄISCHE PATENTSCHRIFT

(11) **EP 2 576 267 B1**
(45) Veröffentlichungstag und Bekanntmachung des Hinweises auf die Patenterteilung: **15.10.2014**
(21) Anmeldenummer: 11722799.1
(22) Anmeldetag: 27.05.2011
(51) Int. Cl.: B60K 35/00, B60K 37/06

(54) **ANZEIGEVORRICHTUNG FÜR EIN FAHRZEUG**
DISPLAY DEVICE FOR A VEHICLE
DISPOSITIF D'AFFICHAGE POUR UN VÉHICULE

(30) Priorität: 13.10.2010 DE 102010042376; 28.05.2010 DE 102010021848
(43) Veröffentlichungstag der Anmeldung: 10.04.2013
(73) Patentinhaber: Johnson Controls GmbH, 51399 Burscheid (DE)
(72) Erfinder: TUZAR, Gert-Dieter, 42799 Leichlingen (DE)
(74) Vertreter: Finger, Catrin
(86) Internationale Anmeldenummer: PCT/EP2011/058724
(87) Internationale Veröffentlichungsnummer: WO 2011/147962

(56) Entgegenhaltungen:
- DE-A1-102004 031 659
- DE-A1-102006 018 672
- DE-A1-102008 041 649
- US-A1- 2009 210 110

## Beschreibung

Die Erfindung betrifft eine kombinierte Anzeige- und Eingabevorrichtung für ein Fahrzeug, wobei eine virtuelle erste Eingabeeinheit vorgesehen ist, die als berührungsempfindlicher Bildschirm zur Bedienung mehrerer Funktionen und zur Anzeige von Informationen ausgebildet ist.

Es ist allgemein bekannt, dass im Innenraum von Kraftfahrzeugen eine Vielzahl von Funktionen vorhanden ist, welche von Fahrzeuginsassen steuerbar sind. Derartige Funktionen sind eine Klimaanlage, Unterhaltungselektronik, Kommunikationsmittel, wie beispielsweise ein Mobiltelefon und Internetanwendungen, sowie ein Navigationssystem.

Zur Steuerung und Anzeige dieser Funktionen sind aus dem Stand der Technik verschiedene Eingabevorrichtungen und Anzeigevorrichtungen bekannt.

Eine Anzeigevorrichtung mit einer Eingabevorrichtung für ein Fahrzeug offenbart die DE 10 2004 031 334 A1. Die Anzeigevorrichtung ist mit einer Anzeigesteuerung zur Anzeige von Informationen auf der Anzeigevorrichtung gekoppelt und in mehrere logische Bereiche aufgeteilt. Mittels der Anzeigesteuerung sind in einem ersten logischen Bereich der Anzeigevorrichtung Straßenverhältnisse, allgemeine und aktuelle Verkehrsregelungen, ein Streckenverlauf und einen Fahrer des Fahrzeugs betreffende Informationen anzeigbar. In einem zweiten logischen Bereich sind dynamische Fahrwerte des Fahrzeugs und Warnanzeigen anzeigbar. Die dynamischen Fahrwerte umfassen eine Geschwindigkeit des Fahrzeugs und eine Motordrehzahl. In einem dritten logischen Bereich der Anzeigevorrichtung sind eine Klimaanlage, ein Infotainmentsystem, ein Navigationssystem, einen Terminplaner, einen so genannten Guide und eine Kommunikationsvorrichtung betreffende Informationen anzeigbar, wobei die Kommunikationsvorrichtung ein Telefon ist. In einem vierten logischen Bereich der Anzeigevorrichtung sind die gleichen Informationen wie im dritten logischen Bereich anzeigbar. Weiterhin umfasst die Anzeigevorrichtung die Eingabevorrichtung, die als berührungsempfindlicher Bildschirm, auch als Touchscreen bekannt, ausgebildet ist. Somit bilden die Anzeigevorrichtung und die Eingabevorrichtung eine kombinierte Anzeige- und Eingabevorrichtung.

Weiterhin ist aus der DE 10 2008 041 649 A1 ein bildschirmbasiertes Fahrzeugbediensystem bekannt, welches eine aus einem berührungssensiblen Bildschirm und einem Bedienelement bestehende Bedieneinrichtung aufweist. Das Bedienelement überdeckt den Bildschirm, wobei in Abhängigkeit von mit dem Bedienelement gewählten Funktionen eine Anzeige auf Bildschirm änderbar ist.

Die DE 103 92 383 T5 (& WO-A-2003/080391) offenbart eine Multifunktionseinheit für ein Fahrzeug, welche einen Anzeigeschirm umfasst. Ferner umfasst die Multifunktionseinheit mindestens einen mechanischen Knopf, welcher teilweise mit dem Anzeigeschirm überlappt und dann, wenn er gedreht wird, eine Änderung einer softwaregesteuerten Darstellung einer Funktion des Knopfes auf dem Anzeigeschirm bewirkt.

Aus der gattungsbildenden DE 10 2004 031 659 A1 ist ein Bedienelement für ein Kraftfahrzeug mit einem Touchscreen zur optischen Darstellung von Informationen und zur Eingabe von Befehlen durch Berühren des Touchscreens oder durch Drücken auf den Touchscreen bekannt. Am Rand des Touchscreens weist das Bedienelement mehrere Bedientasten und ein ringförmiges Drehelement zur Eingabe von Befehlen auf.

Weiterhin ist aus der DE 10 2006 018 672 A1 eine durch eine Touchscreen-Anzeige- und Bedieneinrichtung und durch tastenförmige Bedienelemente gebildete Multifunktionsbedieneinrichtung für ein Kraftfahrzeug mit mehreren Bedienelementen bekannt, wobei über die Bedienelemente Funktionsgruppen und den Funktionsgruppen untergeordnete Funktionen bedienbar sind. Die Funktionsgruppen weisen eine oder mehrere Menüebenen, die über eine Anzeigeeinrichtung darstellbar sind, auf. Sind eine oder mehrere Funktionsgruppen aktiv, ist mit einer Anzeigevorrichtung mindestens eine ausgewählte Funktionsgruppe aus der Gruppe der aktiven Funktionsgruppen und mindestens eine der der ausgewählten Funktionsgruppe untergeordnete Funktion darstellbar. Innerhalb von ausgewählten Funktionsgruppen wird auf mindestens eine nicht ausgewählte aktive Funktionsgruppe und mindestens eine einer nicht ausgewählten aktiven Funktionsgruppe untergeordnete Funktion über Bedienelemente zugegriffen, ohne den Kontext der ausgewählten Funktionsgruppe zu verlassen.

Der Erfindung liegt die Aufgabe zugrunde, eine gegenüber dem Stand der Technik verbesserte kombinierte Anzeige- und Eingabevorrichtung für ein Fahrzeug anzugeben.

Die Aufgabe wird erfindungsgemäß mit einer kombinierten Anzeige- und Eingabevorrichtung gelöst, welche die im Anspruch 1 angegebenen Merkmale aufweist.

Vorteilhafte Ausgestaltungen der Erfindung sind Gegenstand der Unteransprüche.

Die kombinierte Anzeige- und Eingabevorrichtung für ein Fahrzeug umfasst eine virtuelle erste Eingabeeinheit, die als berührungsempfindlicher Bildschirm zur Bedienung mehrerer Funktionen und zur Anzeige von Informationen ausgebildet ist. Weiterhin ist eine physische zweite Eingabeeinheit vorgesehen, wobei die Funktionen mittels der ersten Eingabeeinheit und/oder der zweiten Eingabeeinheit anwählbar sind und Sollwerte der Funktionen mittels der ersten Eingabeeinheit und/oder der zweiten Eingabeeinheit einstellbar sind, wobei die Funktionen und/oder Sollwerte auf dem berührungsempfindlichen Bildschirm anzeigbar sind. Ferner sind erfindungsgemäß als Bestandteil der virtuellen ersten Eingabeeinheit auf dem berührungsempfindlichen Bildschirm virtuelle Bedienelemente anzeigbar, wobei die virtuellen Bedienelemente Taster, Schiebesteller und/oder Drehsteller umfassen.

Unter einer virtuellen Eingabeeinheit wird vorliegend eine Eingabeeinheit verstanden, welche nicht-physische Bedienelemente aufweist. Die nichtphysischen Bedienelemente sind insbesondere als zweidimensionale Symbole auf dem berührungsempfindlichen Bildschirm darstellbar.

Unter einer physischen Eingabeeinheit wird vorliegend eine Eingabeeinheit verstanden, welche physische Bedienelemente, z. B. Schalter, Taster, Drehschalter, Drehsteller, Schiebesteller, Kombinationsschalter und Kombinationssteller, aufweist.

Erfindungsgemäß umfasst die physische zweite Eingabeeinheit zumindest einen Kombinationssteller, wobei der Kombinationssteller eine Kombination eines Drehstellers mit einem Drucktaster und/oder einem Zugtaster ist. Dabei ist mittels einer Drehfunktion des Kombinationsstellers in einem Hauptmenü eine Funktion aus mehreren Funktionen auswählbar und mittels einer Druckfunktion des Kombinationsstellers anwählbar und mittels der Drehfunktion und/oder Druckfunktion des Kombinationsstellers ist in einem Untermenü zumindest ein Sollwert der jeweiligen Funktion einstellbar.

Die erfindungsgemäße kombinierte Anzeige- und Eingabevorrichtung für das Fahrzeug ist einfach aufgebaut und ermöglicht eine einfache und intuitive Bedienung. Dabei erfolgt die Steuerung der verschiedenen Funktionen mit einer reduzierten Anzahl an Eingabe- und Anzeigemitteln, wobei die Anzahl wiederum nicht so gering ist, dass deren Bedienung zu kompliziert für einen Bediener, insbesondere für einen Fahrer des Fahrzeugs, ist. Die virtuellen Bedienelemente sind vorzugsweise real in herkömmlichen Fahrzeugen vorkommenden Bedienelementen nachempfunden, so dass eine intuitive Bedienung der kombinierten Anzeige- und Eingabevorrichtung möglich ist.

Aufgrund dessen, dass die physische zweite Eingabeeinheit zumindest einen Kombinationssteller umfasst, ist die einfache Bedienung der kombinierten Anzeige- und Eingabevorrichtung weiter verbessert. Die Ausbildung des Kombinationsstellers als Kombination eines Drehstellers mit einem Drucktaster und/oder einem Zugtaster ermöglicht es, auf kleinstem Raum mit einer besonders geringen Anzahl an Bedienelementen bei gleichzeitig intuitiver Bedienung mehrere Bedienschritte auszuführen. Aufgrund der geringen Anzahl der Bedienelemente wird eine Übersichtlichkeit verbessert und somit die Bedienung der kombinierten Anzeige- und Eingabevorrichtung erleichtert. Dabei zeichnet sich eine Menüstruktur durch einen einfachen und für den Benutzer nachvollziehbaren Aufbau aus. Die Bedienung mittels des Kombinationsstellers ist hierbei in besonders einfacher Weise durchführbar. Hierzu ist es in vorteilhafter Weise nicht erforderlich, dass der Blick des Bedieners auf den Kombinationssteller gerichtet ist, so dass eine Bedienung der Funktionen möglich ist und eine Ablenkung eines Fahrers des Fahrzeugs vom Verkehrsgeschehen verringert ist.

Vorzugsweise ist der berührungsempfindliche Bildschirm als resistiver, kapazitiver oder induktiver berührungsempfindlicher Bildschirm ausgebildet. Derartige Bildschirme zeichnen sich durch eine hohe Lebensdauer aus und sind kostengünstig verfügbar. Alternativ ist der berührungsempfindliche Bildschirm als schallwellen-gesteuerte Vorrichtung oder als optisch gesteuerte Vorrichtung, beispielsweise mit einem Infrarotlicht-Gitter vor dem Bildschirm, ausgebildet. Auch ist die Ausbildung als so genannte Dispersive-Signal-Technology-Vorrichtung möglich.

Besonders bevorzugt sind die virtuellen Bedienelemente in Abhängigkeit der gewählten Funktion an unterschiedlichen Positionen auf dem berührungsempfindlichen Bildschirm angeordnet. Somit ist stets eine übersichtliche Darstellung auf dem berührungsempfindlichen Bildschirm realisierbar.

In einer vorteilhaften Weiterbildung umfasst die physische zweite Eingabeeinheit zumindest einen Taster, einen Drehsteller und/oder einen Schiebesteller, welche die einfache Bedienung der kombinierten Anzeige- und Eingabevorrichtung weiter verbessern.

In einer möglichen Weiterbildung sind die Funktionen in einem Hauptmenü mittels der zweiten Eingabeeinheit anwählbar und in zumindest einem Untermenü Unterfunktionen und/oder die zugehörigen Sollwerte mittels der ersten Eingabeeinheit einstellbar. Die Auswahl der Funktion, deren Sollwert verändert werden soll, erfolgt in besonders einfacher Weise direkt durch Betätigung eines Bedienelements der physischen zweiten Eingabeeinheit. Die Einstellung des Sollwerts ist in besonders vorteilhafter Weise mittels der ersten Eingabeeinheit, d. h. mittels des berührungsempfindlichen Bildschirms, durchführbar. Auf dem berührungsempfindlichen Bildschirm sind die Bedienelemente abhängig von der einzustellenden Funktion ausgebildet und angeordnet, so dass bei minimierter Anzahl von Bedienelementen stets eine optimal an die Funktion bzw. den einzustellenden Sollwert angepasste Eingabeeinheit zur Verfügung steht, mittels welcher der Sollwert exakt und einfach einstellbar ist.

Gemäß einer besonderen Ausgestaltung sind mehrere Funktionen und/oder Sollwerte gleichzeitig anzeigbar und/oder mehrere Sollwerte einer oder mehrerer Funktionen gleichzeitig einstellbar. Dabei werden dem Benutzer mehrere Informationen gleichzeitig und in übersichtlicher Art und Weise dargestellt und eine Bedienung ist für den Benutzer ohne aufwändige Wechsel zwischen einer großen Anzahl von Menüpunkten möglich.

Die Funktionen, welche mittels der kombinierten Anzeige- und Eingabevorrichtung anwählbar und deren Sollwerte einstellbar sind, sind insbesondere Klimaanlagenfunktionen, Funktionen zur Steuerung einer Unterhaltungselektronik, Funktionen zur Steuerung einer Kommunikationsvorrichtung, Funktionen zur Steuerung einer Navigationsvorrichtung, Funktionen zur Steuerung eines Fahrwerks des Fahrzeugs, Funktionen zur Steuerung eines Antriebsstranges des Fahrzeugs, Funktionen zur Steuerung einer Fahrzeugbeleuchtung und/oder Funktionen zur Steuerung von Komforteinrichtungen des Fahrzeugs. Zu den Komforteinrichtungen zählen beispielsweise eine Sitzheizung, eine Sitzbelüftung und eine Standheizung.

Ausführungsbeispiele der Erfindung werden im Folgenden anhand von Zeichnungen näher erläutert.

Dabei zeigen:
- Figur 1: schematisch ein erstes Ausführungsbeispiel einer erfindungsgemäßen kombinierten Anzeige- und Eingabevorrichtung,
- Figur 2A bis 2D: schematisch verschiedene Zustände der Anzeige- und Eingabevorrichtung gemäß Figur 1,
- Figur 3: schematisch ein zweites Ausführungsbeispiel einer erfindungsgemäßen kombinierten Anzeige- und Eingabevorrichtung,
- Figur 4A bis 4C: schematisch verschiedene Zustände der Anzeige- und Eingabevorrichtung gemäß Figur 3, und
- Figur 5A bis 5C: schematisch verschiedene Zustände während einer Bedienung eines dritten Ausführungsbeispiels einer erfindungsgemäßen kombinierten Anzeige- und Eingabevorrichtung und eine Schnittdarstellung der kombinierten Anzeige- und Eingabevorrichtung.

Einander entsprechende Teile sind in allen Figuren mit den gleichen Bezugszeichen versehen.

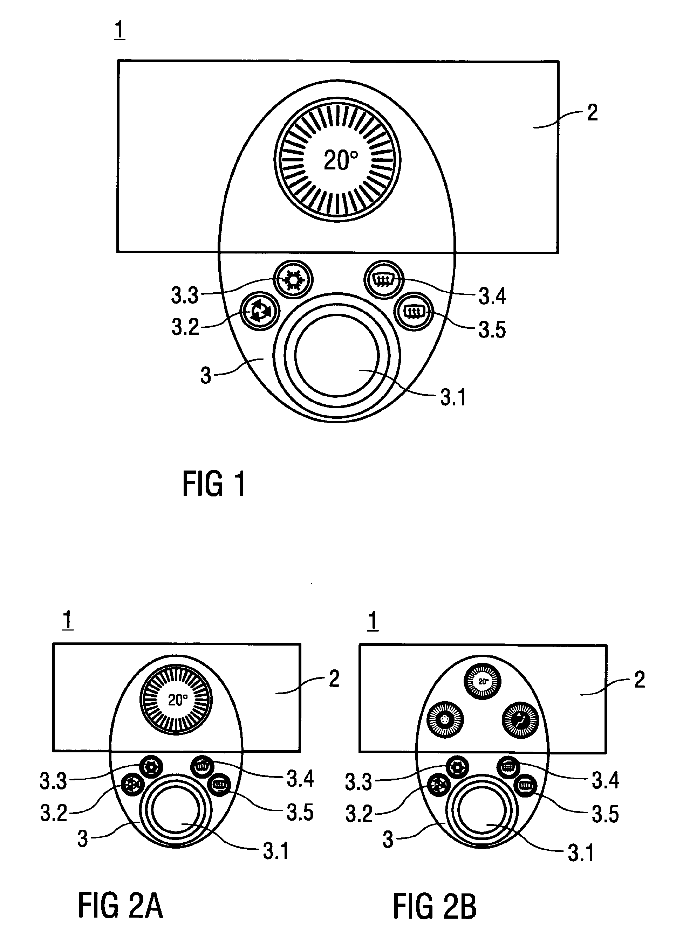

Figur 1 zeigt ein erstes Ausführungsbeispiel einer erfindungsgemäßen kombinierten Anzeige- und Eingabevorrichtung 1, welche zur Anzeige von Informationen und zur Bedienung von Funktionen innerhalb eines nicht dargestellten Fahrzeugs angeordnet ist. Das dargestellte Ausführungsbeispiel der kombinierten Anzeige- und Eingabevorrichtung 1 ist zur Bedienung einer Klimaanlage und zur Anzeige von Informationen, welche die Klimatisierung des Innenraums eines Fahrzeugs betreffen, ausgebildet.

Die kombinierte Anzeige- und Eingabevorrichtung 1 umfasst eine virtuelle erste Eingabeeinheit 2, die als berührungsempfindlicher Bildschirm, d. h. als so genannter Touchscreen, ausgebildet ist. Der berührungsempfindliche Bildschirm ist im dargestellten Ausführungsbeispiel als kapazitiver berührungsempfindlicher Bildschirm, als so genanntes Capacitive Interactive Display (kurz: CID), ausgebildet. Alternativ ist der berührungsempfindliche Bildschirm ein resistiver, induktiver, schallwellengesteuerter oder optisch gesteuerter berührungsempfindlicher Bildschirm. Auch ist die Ausbildung als so genannte Dispersive-Signal-Technology-Vorrichtung möglich.

Die kombinierte Anzeige- und Eingabevorrichtung 1 umfasst weiterhin eine physische zweite Eingabeeinheit 3, welche einen Kombinationssteller 3.1 und vier Taster 3.2 bis 3.5 umfasst.

Mittels der Taster 3.2 bis 3.5 sind verschiedene Funktionen der Klimaanlage des Fahrzeugs direkt anwählbar. Ein erster Taster 3.2 ist zur Aktivierung und Deaktivierung eines Umluftbetriebs einer Lüftung, ein zweiter Taster 3.3 zur Aktivierung und Deaktivierung der Klimaanlage, d. h. insbesondere eines Klimakompressors, ein dritter Taster 3.4 zur Aktivierung und Deaktivierung einer intensiven Belüftung einer Frontscheibe des Fahrzeugs (= so genannte Enteisungsfunktion) und ein vierter Taster 3.5 zur Aktivierung und Deaktivierung einer Heckscheibenheizung vorgesehen.

Der Kombinationssteller 3.1 ist aus einer Kombination eines Drehstellers mit einem Drucktaster und einem Zugtaster gebildet. Mittels des Kombinationsstellers 3.1 sind Sollwerte bestimmter Funktionen der Klimaanlage einstellbar.

Im dargestellten Ausführungsbeispiel ist mittels einer Drehfunktion des Kombinationsstellers 3.1 in einem dargestellten Untermenü der Sollwert einer Innenraumtemperatur, hier von 20 °C, einstellbar. Die Veränderung der Solltemperatur durch den Kombinationssteller 3.1 resultiert dabei unmittelbar in einer Veränderung des Sollwerts, der beispielsweise einem Temperaturregler vorgegeben wird. Zusätzlich ist es möglich, dass die mittels Drehung ausgewählte Innenraumtemperatur durch Drücken des Kombinationsstellers 3.1 bestätigt wird.

Alternativ ist es möglich, dass durch Ausübung der Druckfunktion des Kombinationsstellers 3.1 auf dem berührungsempfindlichen Bildschirm in ein Hauptmenü bzw. ein so genanntes Auswahlmenü gewechselt wird, in welchem der Benutzer vorzugsweise wiederum durch Drehen des Kombinationsstellers 3.1 zwischen verschiedenen Funktionen der Klimaanlage wählen kann. Durch Drücken des Kombinationsstellers 3.1 wird die gewünschte Funktion ausgewählt. Bei diesen Funktionen handelt es sich neben der Steuerung der Innenraumtemperatur, um eine Steuerung einer Gebläsestufe der Lüftung und eine Ansteuerung verschiedener Ausströmöffnungen der Lüftung.

Um in das Hauptmenü zurückzugelangen ist es alternativ möglich, dass anstatt der Druckfunktion des Kombinationsstellers 3.1 eine Zugfunktion des Kombinationsstellers 3.1 ausgeführt wird.

Die Figuren 2A bis 2D zeigen die kombinierte Anzeige- und Eingabevorrichtung 1 gemäß Figur 1 in verschiedenen Zuständen, d. h. während der Bedienung in verschiedenen Menüpunkten.

Dabei ist die virtuelle erste Eingabeeinheit 2 oberhalb der physischen zweiten Eingabeeinheit 3 angeordnet bzw. schließt sich direkt oberhalb der physischen zweiten Eingabeeinheit 3 an diese an.

Alternativ oder zusätzlich ist auch eine Anordnung zueinander möglich, bei welcher die virtuelle erste Eingabeeinheit 2 und die physische zweite Eingabeeinheit 3 nebeneinander, überlappend, nebeneinander und überlappend und/oder übereinander und überlappend angeordnet sind.

In besonders vorteilhafter Weise ist die Darstellung auf dem berührungsempfindlichen Bildschirm derart ausgebildet, dass eine Form der physischen zweiten Eingabeeinheit 3 in der Darstellung auf dem berührungsempfindlichen Bildschirm nachgeahmt bzw. fortgeführt wird. Mit anderen Worten: Die Darstellung auf dem berührungsempfindlichen Bildschirm erfolgt in der Art, dass die optische Darstellung als Bestandteil der physischen zweiten Eingabeeinheit 3 erscheint. Daraus ergibt sich eine logische, einfach verständliche und intuitiv bedienbare Anordnung für den Benutzer.

In Figur 2A ist die kombinierte Anzeige- und Eingabevorrichtung 1 gemäß Figur 1 in einem Untermenü dargestellt, bei welchem durch Drehen des Kombinationsstellers 3.1 der Sollwert der Innenraumtemperatur vorgebbar ist. Der eingestellte Sollwert der Innenraumtemperatur wird auf dem berührungsempfindlichen Bildschirm ausgegeben. Durch Ziehen am Kombinationssteller 3.1 kehrt die Anzeige- und Eingabevorrichtung 1 in das Hauptmenü bzw. Auswahlmenü zurück.

Dieses Hauptmenü ist in Figur 2B dargestellt, wobei verschiedene zur Auswahl stehende Funktionen der Klimaanlage gemeinsam auf dem berührungsempfindlichen Bildschirm angezeigt werden. Bei den Funktionen handelt es sich, wie bereits beschrieben, um die Steuerung der Innenraumtemperatur, um die Steuerung der Gebläsestufe der Lüftung und die Ansteuerung verschiedener Ausströmöffnungen der Lüftung, d. h. einer so genannten Luftstromverteilung im Fahrzeug.

Durch Drehen des Kombinationsstellers 3.1 ist die gewünschte Funktion, deren Sollwert verändert werden soll, auswählbar, wobei eine aktuell gewählte Funktion durch eine Markierung, beispielsweise eine farbliche Markierung oder eine Beleuchtung, gekennzeichnet ist. Vorliegend ist die Funktion der Steuerung der Innenraumtemperatur gewählt.

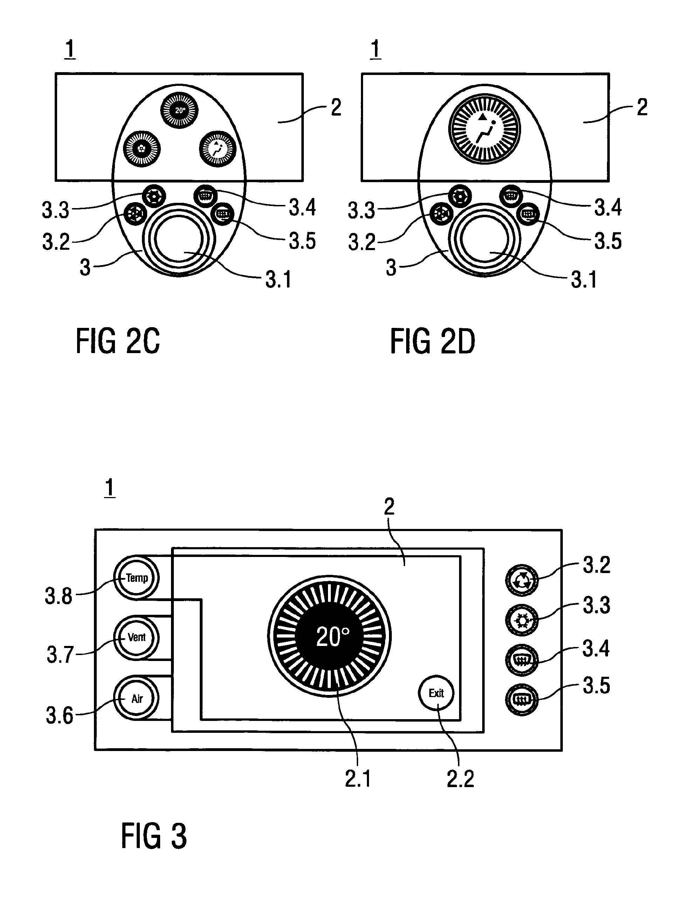

Nach dem Drehen des Kombinationsstellers 3.1 im Uhrzeigersinn ist, wie in Figur 2C dargestellt, die Ansteuerung der Luftstromverteilung gewählt.

Durch Druck des Kombinationsstellers 3.1 gelangt der Benutzer in das in Figur 2D dargestellte Untermenü, in welchem dieser wiederum durch Drehbewegung des Kombinationsstellers 3.1 den Sollwert der Luftstromverteilung vorgeben kann. Durch die Zugbewegung am Kombinationssteller 3.1 kehrt die kombinierte Anzeige- und Eingabevorrichtung 1 in das Hauptmenü zurück.

In Figur 3 ist ein zweites Ausführungsbeispiel der erfindungsgemäßen kombinierten Anzeige- und Eingabevorrichtung 1 dargestellt, wobei das dargestellte Ausführungsbeispiel der kombinierten Anzeige- und Eingabevorrichtung 1 wiederum zur Bedienung einer Klimaanlage und zur Anzeige von Informationen, welche die Klimatisierung des Innenraums eines Fahrzeugs betreffen, vorgesehen ist.

Die physische zweite Eingabeeinheit 3 umgibt dabei die virtuelle erste Eingabeeinheit 2 rahmenförmig. In besonders vorteilhafter Weise bildet die rahmenförmige physische zweite Eingabeeinheit 3 gleichzeitig einen Rahmen zur Befestigung der kombinierten Anzeige- und Eingabevorrichtung 1 innerhalb des Fahrzeugs, beispielsweise zur Integration in einer Armaturentafel des Fahrzeugs.

Die physische zweite Eingabeeinheit 3 weist zusätzlich zu den Tastern 3.2 bis 3.5 drei weitere Taster 3.6 bis 3.8 auf, mittels welchen die Funktionen der Steuerung der Innenraumtemperatur (= Taster 3.8), der Steuerung der Gebläsestufe der Lüftung (= Taster 3.7) und der Ansteuerung verschiedener Ausströmöffnungen der Lüftung (= Taster 3.6) direkt anwählbar sind.

Ein Kombinationssteller 3.1 gemäß der Figuren 1 und 2A bis 2D ist nicht vorhanden. Die mittels des Kombinationsstellers 3.1 durchgeführte Bedienung erfolgt zum einen durch die Taster 3.6 bis 3.8, mittels welcher die jeweilige Funktion ausgewählt wird, deren Sollwert eingestellt werden soll.

Die Einstellung des Sollwerts erfolgt über den berührungsempfindlichen Bildschirm. Nach der Auswahl der Funktion wird die angewählte Funktion symbolartig auf dem berührungsempfindlichen Bildschirm dargestellt. Im dargestellten Ausführungsbeispiel ist die Innentemperatur des Fahrzeugs als einzustellende Funktion ausgewählt. Zur Einstellung des Sollwerts der Innentemperatur ist auf dem berührungsempfindlichen Bildschirm ein erstes virtuelles Bedienelement 2.1 anzeigbar.

Das erste virtuelle Bedienelement 2.1 ist ein Drehsteller, wobei durch eine kreisende Bewegung im Randbereich des virtuellen Drehstellers mit einem Finger des Benutzers oder einem so genannten Eingabestift der Sollwert der Innenraumtemperatur eingestellt wird.

Zum Verlassen des Untermenüs ist auf dem berührungsempfindlichen Bildschirm ein zweites virtuelles Bedienelement 2.2 anzeigbar, welches einen Taster nachbildet.

Zusätzlich ist ein direkter Wechsel in eine andere Funktion durch Betätigung einer der Taster 3.2 bis 3.7 möglich.

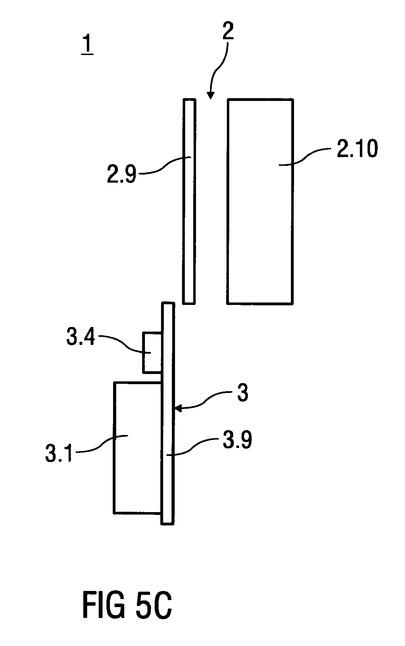

Alternativ zur rahmenförmigen Ausbildung der zweiten Eingabeeinheit 3 werden die erste Eingabeeinheit 2 und die zweite Eingabeeinheit 3 mittels einer gemeinsamen berührungsempfindlichen Schicht 2.9, welche beispielhaft in Figur 5C dargestellt ist, gebildet. Diese Schicht 2.9 ist transparent aus Glas oder Kunststoff gebildet und im gesamten Bereich, welcher eine ebenfalls in Figur 5C näher dargestellte Anzeigeeinheit 2.10 abdeckt, als resistive oder kapazitive Schicht 2.9 ausgebildet. Bei einer Berührung der Schicht 2.9 werden elektrische Signale erzeugt, mittels welcher eine Position der Berührung ermittelbar ist und mittels welcher die erste Eingabeeinheit 2 steuerbar ist.

Zur Erzeugung der zweiten Eingabeeinheit 3 ist die Schicht 2.9 seitlich über die Anzeigeeinheit 2.10 hinausgeführt. Im Bereich der dargestellten Taster 3.2 bis 3.8 sind in der Schicht 2.9 kapazitive und/oder resistive Sensoren eingebracht oder ausgebildet, welche bei Berührung die gleichen Aktionen wie bei Betätigung der Tasten 3.2 bis 3.8 auslösen. Zur Darstellung für den Nutzer, sind die Bereiche, in welchen sich die kapazitiven und/oder resistiven Sensoren befinden, zusätzlich vorzugsweise hinterleuchtet. Aufgrund dieser Ausbildung der kombinierten Anzeige- und Eingabevorrichtung 1 weist diese eine durchgängige Oberfläche auf, welche sich durch eine hohe Anmutung und einen hohen Qualitätseindruck auszeichnet.

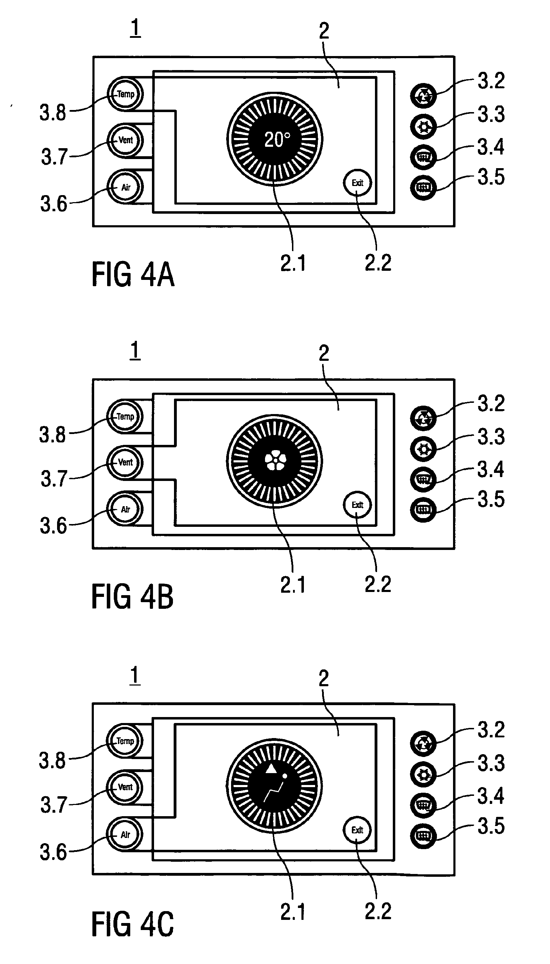

Figur 4A zeigt die kombinierte Anzeige- und Eingabevorrichtung 1 gemäß Figur 3 im Untermenü zur Einstellung der Innenraumtemperatur anhand kreisender oder drehender Bewegungen im Randbereich des virtuellen Drehstellers.

Um die Funktion der Steuerung der Gebläsestufe der Lüftung zu aktivieren, sind eine Betätigung des zweiten virtuellen Betätigungselements 2.2 und eine anschließende Betätigung des Tasters 3.7 erforderlich. Das zweite virtuelle Betätigungselement 2.2 bildet dabei ein Beendigungsmittel bzw. einen so genannten Exit-Punkt.

Alternativ ist auch eine alleinige Betätigung des Tasters 3.7 ausreichend, um die Funktion der Steuerung der Gebläsestufe der Lüftung zu aktivieren.

Nach dieser Anwahl der Funktion der Steuerung der Gebläsestufe der Lüftung, welche in Figur 4B dargestellt ist, ist eine Einstellung der Gebläsestufe wiederum durch kreisende oder drehende Bewegung im Randbereich des ersten virtuellen Bedienelements 2.1, d. h. des virtuellen Drehstellers, ausführbar.

Um die Funktion der Steuerung der Gebläsestufe der Lüftung zu verlassen und die Funktion der Ansteuerung der verschiedenen Ausströmöffnungen der Lüftung zu aktivieren, sind eine Betätigung des zweiten virtuellen Betätigungselements 2.2 und eine anschließende Betätigung des Tasters 3.6 erforderlich. Alternativ ist auch eine alleinige Betätigung des Tasters 3.6 ausreichend.

Nach dieser Anwahl der Ansteuerung verschiedener Ausströmöffnungen der Lüftung, welche in Figur 4C dargestellt ist, ist eine Einstellung der Luftverteilung durch Betätigung des ersten virtuellen Bedienelements 2.1 durchführbar. Durch Betätigung des Bedienelements 2.1 an bestimmten Positionen werden die Ausströmöffnungen aktiviert, welche sich im Bezug auf den symbolartig dargestellten Fahrzeuginsassen an der betätigten Position im Fahrzeug befinden.

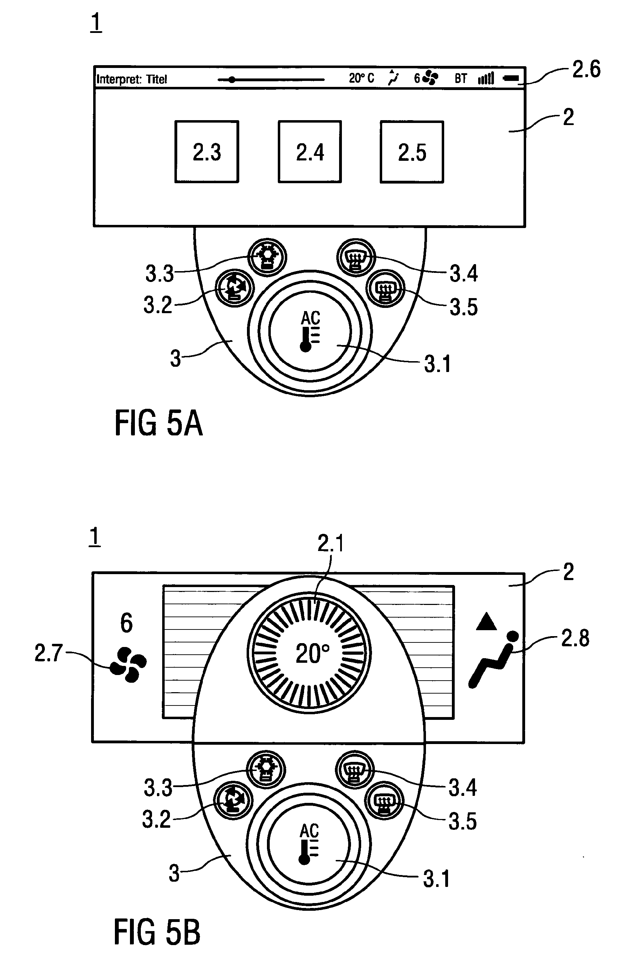

In den Figuren 5A und 5B sind verschiedene Zustände während einer Bedienung eines dritten Ausführungsbeispiels einer erfindungsgemäßen kombinierten Anzeige- und Eingabevorrichtung 1 dargestellt.

Die kombinierte Anzeige- und Eingabevorrichtung 1 umfasst wiederum eine virtuelle erste Eingabeeinheit 2 und eine physische zweite Eingabeeinheit 3.

Die physische zweite Eingabeeinheit 3 umfasst einen Kombinationssteller 3.1 und vier Taster 3.2 bis 3.5 gemäß der in Figur 1 dargestellten physischen zweiten Eingabeeinheit 3.

Die virtuelle erste Eingabeeinheit 2 ist im dargestellten Ausführungsbeispiel als resistiver berührungsempfindlicher Bildschirm ausgebildet.

Mittels des dargestellten dritten Ausführungsbeispiels der kombinierten Anzeige- und Eingabevorrichtung 1 gemäß Figur 5A sind zusätzlich zu den bereits in den vorherigen Figuren beschriebenen Funktionen der Klimaanlage des Fahrzeugs Funktionen einer Datenbank, Funktionen einer Unterhaltungselektronik, insbesondere eines Audiosystems, und Fahrzeugfunktionen bedienbar und/oder regelbar. Die Fahrzeugfunktionen umfassen Funktionen zur Steuerung eines Fahrwerks des Fahrzeugs, Funktionen zur Steuerung eines Antriebsstranges des Fahrzeugs, Funktionen zur Steuerung einer Fahrzeugbeleuchtung und Funktionen zur Steuerung von Komforteinrichtungen des Fahrzeugs.

Zur Anwahl der Funktionen sind auf dem berührungsempfindlichen Bildschirm drei virtuelle Bedienelemente 2.3 bis 2.5 ausgebbar, wobei mittels des virtuellen Bedienelements 2.3 die Funktionen der Datenbank, mittels des virtuellen Bedienelements 2.4 die Funktionen der Unterhaltungselektronik und mittels des virtuellen Bedienelements 2.5 die Fahrzeugfunktionen auswählbar sind.

Die virtuellen Bedienelemente 2.3 bis 2.5 sind als virtuelle Taster ausgebildet, wobei ein zugehöriges nicht näher dargestelltes Untermenü zu den jeweiligen Funktionen bei Berührung der virtuellen Bedienelemente 2.3 bis 2.5 geöffnet wird. Die Bedienung der Funktionen innerhalb des jeweiligen Untermenüs erfolgt über den berührungssensiblen Bildschirm, wobei hierzu in nicht dargestellter Weise weitere virtuelle Bedienelemente als Taster, Schiebesteller und/oder Drehsteller anzeigbar sind.

Diese virtuellen Bedienelemente und die virtuellen Bedienelemente 2.1 bis 2.5 sind in Abhängigkeit der gewählten Funktion an unterschiedlichen Positionen auf dem berührungsempfindlichen Bildschirm angeordnet.

Im oberen Bereich des berührungssensiblen Bildschirms wird zusätzlich eine Informationsleiste 2.6 angezeigt, mittels welcher aktuelle Einstellungen der Funktionen angezeigt werden. Im dargestellten Ausführungsbeispiel werden die Einstellungen der Klimaanlage und des Audiosystems des Fahrzeugs angezeigt.

Durch Betätigung des Kombinationsstellers 3.1, insbesondere durch Drücken desselben, wechselt die kombinierte Anzeige- und Eingabevorrichtung 1 in ein Menü zur Einstellung der Funktion der Klimaanlage des Fahrzeugs.

Figur 5B zeigt dieses Menü, wobei auf dem berührungsempfindlichen Bildschirm die Funktion der Innenraumtemperatur, die Funktion der Gebläsestufe und die Funktion der Luftverteilung gemeinsam symbolartig dargestellt sind.

Im dargestellten Ausführungsbeispiel ist die Funktion der Innenraumtemperatur durch Drücken des Kombinationsstellers 3.1 angewählt, wobei die Einstellung des Sollwertes der Innenraumtemperatur gemäß der Beschreibung zu den Figuren 1 und 2A bis 2D durch Drehbewegungen des Kombinationsstellers 3.1 erfolgt. Ein Wechsel zu einer der beiden verbleibenden Funktionen der Klimaanlage erfolgt durch erneutes Drücken des Kombinationsstellers 3.1 und anschließende Auswahl der Funktion durch die Drehbewegung.

Alternativ oder zusätzlich ist ein Wechsel in Untermenüs zur Einstellung der Sollwerte der verbleibenden Funktionen der Klimaanlage durch Berührung des berührungsempfindlichen Bildschirms im Bereich der Symbole der jeweiligen Funktion möglich, wobei die Einstellung innerhalb des Untermenüs wiederum in der beschriebenen Art und Weise mittels des Kombinationsstellers 3.1 erfolgt.

Alternativ oder zusätzlich sind nach dem Drücken des Kombinationsstellers 3.1 und dem Öffnen des Menüs zur Einstellung der Funktion der Klimaanlage des Fahrzeugs die einzelnen Sollwerte der Funktionen der Klimaanlage durch Betätigung auf dem berührungsempfindlichen Bildschirm erzeugter virtueller Bedienelemente 2.1, 2.6, 2.7 einstellbar.

Zur Einstellung der Innenraumtemperatur ist das erste virtuelle Bedienelement 2.1, welches als Drehsteller ausgebildet ist, vorgesehen. Die beiden weiteren Bedienelemente 2.6, 2.7 sind als virtuelle Taster ausgebildet, wobei die Einstellung der Sollwerte durch einfache oder mehrmalige Berührung des berührungsempfindlichen Bildschirms erfolgt.

In Figur 5C ist eine Schnittdarstellung des dritten Ausführungsbeispiels der kombinierten Anzeige- und Eingabevorrichtung 1 dargestellt, wobei die kombinierte Anzeige- und Eingabevorrichtung 1 die als berührungsempfindlicher Bildschirm ausgebildete erste Eingabeeinheit 2 umfasst. Der berührungsempfindliche Bildschirm ist als resistiver berührungsempfindlicher Bildschirm ausgebildet, welcher eine resistive und transparente Schicht 2.9 aufweist. Diese Schicht 2.9 erzeugt bei einer Berührung elektrische Signale, mittels welcher eine Position der Berührung ermittelbar ist und mittels welcher die erste Eingabeeinheit 2 steuerbar ist. Zur Darstellung und/oder Hervorhebung einzelner Bereiche der resistiven Schicht 2.9 ist diese zumindest bereichsweise hinterleuchtet.

Weiterhin weist die erste elektrische Eingabeeinheit 2 eine parallel mit ihrer flächigen Ausdehnungen zur resistiven und transparenten Schicht 2.9 angeordnete Anzeigeeinheit 2.10 zur Anzeige der Informationen auf, wobei die Anzeigeeinheit 2.10 von der transparenten Schicht 2.9 abgedeckt ist.

Die physische zweite Eingabeeinheit 3 weist ein Gehäuse 3.9 auf. Das Gehäuse 3.9 weist in nicht näher dargestellter Weise zu den Tastern 3.2 bis 3.5 und zu dem Kombinationssteller 3.1 korrespondierende Aussparungen auf, durch welche diese hindurchgeführt sind. Im Inneren des Gehäuses 3.9 ist in nicht näher dargestellter Weise eine elektrische Verschaltung der Taster 3.2 bis 3.5 und des Kombinationsstellers 3.1 angeordnet.

### Bezugszeichenliste

- 1: kombinierte Anzeige- und Eingabevorrichtung
- 2: erste Eingabeeinheit
- 2.1: virtuelles Bedienelement
- 2.2: virtuelles Bedienelement
- 2.3: virtuelles Bedienelement
- 2.4: virtuelles Bedienelement
- 2.5: virtuelles Bedienelement
- 2.6: Informationsleiste
- 2.7: virtuelles Bedienelement
- 2.8: virtuelles Bedienelement
- 2.9: Schicht
- 2.10: Anzeigeeinheit
- 3: zweite Eingabeeinheit
- 3.1: Kombinationssteller
- 3.2: Taster
- 3.3: Taster
- 3.4: Taster
- 3.5: Taster
- 3.6: Taster
- 3.7: Taster
- 3.8: Taster
- 3.9: Gehäuse

## Patentansprüche

1. Kombinierte Anzeige- und Eingabevorrichtung (1) für ein Fahrzeug, wobei eine virtuelle erste Eingabeeinheit (2), umfassend nicht-physische Bedienelemente, vorgesehen ist, die als berührungsempfindlicher Bildschirm zur Bedienung mehrerer Funktionen und zur Anzeige von Informationen ausgebildet ist, wobei eine physische zweite Eingabeeinheit (3), umfassend physische Bedienelemente, vorgesehen ist, wobei die Funktionen mittels der ersten Eingabeeinheit (2) und/oder der zweiten Eingabeeinheit (3) anwählbar sind und Sollwerte der Funktionen mittels der ersten Eingabeeinheit (2) und/oder der zweiten Eingabeeinheit (3) einstellbar sind, wobei die Funktionen und/oder Sollwerte auf dem berührungsempfindlichen Bildschirm anzeigbar sind und dass als Bestandteil der virtuellen ersten Eingabeeinheit (2) auf dem berührungsempfindlichen Bildschirm virtuelle Bedienelemente (2.1 bis 2.6, 2.7, 2.8) anzeigbar sind, wobei die virtuellen Bedienelemente (2.1 bis 2.6, 2.7, 2.8) Taster, Schiebesteller und/oder Drehsteller umfassen,
**dadurch gekennzeichnet, dass** die physische zweite Eingabeeinheit (3) zumindest einen Kombinationssteller (3.1) umfasst, wobei der Kombinationssteller (3.1) eine Kombination eines Drehstellers mit einem Drucktaster und/oder einem Zugtaster ist, wobei mittels einer Drehfunktion des Kombinationsstellers (3.1) in einem Hauptmenü eine Funktion aus mehreren Funktionen auswählbar ist und mittels einer Druckfunktion des Kombinationsstellers (3.1) anwählbar ist und mittels der Drehfunktion und/oder Druckfunktion des Kombinationsstellers (3.1) in einem Untermenü zumindest ein Sollwert der jeweiligen Funktion einstellbar ist.

2. Kombinierte Anzeige- und Eingabevorrichtung (1) nach Anspruch 1, **dadurch gekennzeichnet, dass** der berührungsempfindliche Bildschirm als resistiver, kapazitiver oder induktiver berührungsempfindlicher Bildschirm ausgebildet ist.

3. Kombinierte Anzeige- und Eingabevorrichtung (1) nach Anspruch 2, **dadurch gekennzeichnet, dass** die virtuellen Bedienelemente (2.1 bis 2.6, 2.7, 2.8) in Abhängigkeit der gewählten Funktion an unterschiedlichen Positionen auf dem berührungsempfindlichen Bildschirm angeordnet sind.

4. Kombinierte Anzeige- und Eingabevorrichtung (1) nach einem der vorhergehenden Ansprüche,
**dadurch gekennzeichnet, dass** die physische zweite Eingabeeinheit (3) zumindest einen Taster (3.2 bis 3.8), einen Drehsteller und/oder einen Schiebesteller umfasst.

5. Kombinierte Anzeige- und Eingabevorrichtung (1) nach einem der vorhergehenden Ansprüche,
**dadurch gekennzeichnet, dass** die Funktionen in einem Hauptmenü mittels der zweiten Eingabeeinheit (3) anwählbar sind und in zumindest einem Untermenü Unterfunktionen und/oder die zugehörigen Sollwerte mittels der ersten Eingabeeinheit (2) einstellbar sind.

6. Kombinierte Anzeige- und Eingabevorrichtung (1) nach einem der vorhergehenden Ansprüche,
**dadurch gekennzeichnet, dass** mehrere Funktionen und/oder Sollwerte gleichzeitig anzeigbar und/oder mehrere Sollwerte einer oder mehrerer Funktionen gleichzeitig einstellbar sind.

7. Kombinierte Anzeige- und Eingabevorrichtung (1) nach einem der vorhergehenden Ansprüche,
**dadurch gekennzeichnet, dass** die Funktionen
- Klimaanlagenfunktionen,
- Funktionen zur Steuerung einer Unterhaltungselektronik,
- Funktionen zur Steuerung einer Kommunikationsvorrichtung,
- Funktionen zur Steuerung einer Navigationsvorrichtung,
- Funktionen zur Steuerung eines Fahrwerks des Fahrzeugs,
- Funktionen zur Steuerung eines Antriebsstranges des Fahrzeugs,
- Funktionen zur Steuerung einer Fahrzeugbeleuchtung und/oder
- Funktionen zur Steuerung von Komforteinrichtungen des Fahrzeugs sind.

## Claims

1. A combined display and input device (1) for a vehicle, whereby a virtual first input unit (2) comprising non-physical control units, is provided, which is in the form of a contact-sensitive monitor for operating multiple functions and for displaying information, whereby a physical second input unit (3), comprising physical control units, is provided, wherein the functions are selectable by using the first input unit (2) and/or the second input unit (3) and target values of the functions are settable by using the first input unit (2) and/or the second input unit (3), wherein the functions and/or target values are displayable on the contact-sensitive monitor and that virtual control elements (2.1 through 2.6, 2.7, 2.8) are displayable on the contact-sensitive monitor as part of the virtual first input unit (2), wherein the virtual control elements (2.1 through 2.6, 2.7, 2.8) comprise buttons, slide controls and/or rotary controls,
**characterized in that** the physical second input unit (3) comprises at least a combined control (3.1), wherein the combined control (3.1) is a combination of a rotary control with a press switch and/or a pull switch, wherein a function is selectable from multiple functions in a main menu by means of a rotary function of the combined control (3.1) and can be chosen by means of a press function of the combined control (3.1) and that at least one target value of the respective function is settable by means of the rotary function and/or the press function of the combined control (3.1) in a submenu.

2. The combined display and input device (1) as claimed in claim 1, **characterized in that** the contact-sensitive monitor is in the form of a resistive, capacitive or inductive contact-sensitive monitor.

3. The combined display and input device (1) as claimed in claim 2, **characterized in that** the virtual control elements (2.1 through 2.6, 2.7, 2.8) are arranged at different positions on the contact-sensitive monitor depending on the selected function.

4. The combined display and input device (1) as claimed in any one of the preceding claims, **characterized in that** the physical second input unit (3) comprises at least one button (3.2 through 3.8), a rotary control and/or a slide control.

5. The combined display and input device (1) as claimed in any one of the preceding claims, **characterized in that** the functions in a main menu are selectable by means of the second input unit (3) and subfunctions and/or the associated target values in at least one submenu are settable by means of the first input unit (2).

6. The combined display and input device (1) as claimed in any one of the preceding claims, **characterized in that** multiple functions and/or target values are displayable simultaneously and/or multiple target values of one or more functions are settable simultaneously.

7. The combined display and input device (1) as claimed in any one of the preceding claims, **characterized in that** the functions are
- air conditioning functions,
- functions for controlling entertainment electronics,
- functions for controlling a communications device,
- functions for controlling a navigation device,
- functions for controlling a chassis of the vehicle,
- functions for controlling a drive train of the vehicle,
- functions for controlling vehicle lighting and/or

## Revendications

1. Dispositif combiné d'affichage et de saisie (1) pour un véhicule, une première unité de saisie (2) virtuelle, comprenant des éléments de commande non physiques, étant prévue, laquelle est réalisée sous la forme d'un écran tactile destiné à commander plusieurs fonctions et à afficher des informations, une deuxième unité de saisie (3) physique, comprenant des éléments de commande physiques, étant prévue, les fonctions pouvant être sélectionnées à l'aide de la première unité de saisie (2) et/ou de la deuxième unité de saisie (3) et les valeurs de consigne des fonctions pouvant être réglées à l'aide de la première unité de saisie (2) et/ou de la deuxième unité de saisie (3), les fonctions et/ou les valeurs de consigne pouvant être affichées sur l'écran tactile et des éléments de commande virtuels (2.1 à 2.6, 2.7, 2.8) pouvant être affichés sur l'écran tactile en tant que composants de la première unité de saisie (2) virtuelle, les éléments de commande virtuels (2.1 à 2.6, 2.7, 2.8) comprenant des touches, des curseurs de réglage et/ou des boutons de réglage rotatifs,
**caractérisé en ce que** la deuxième unité de saisie (3) physique comprend au moins un élément de réglage combiné (3.1), l'élément de réglage combiné (3.1) étant une combinaison d'un bouton de réglage et rotatif d'un bouton-poussoir et/ou d'une touche à tirette, une fonction parmi plusieurs fonctions pouvant être sélectionnée dans un menu principal à l'aide d'une fonction de rotation de l'élément de réglage combiné (3.1) et pouvant être activée à l'aide d'une fonction de pression de l'élément de réglage combiné (3.1) et au moins une valeur de consigne de la fonction correspondante pouvant être réglée dans un sous-menu à l'aide de la fonction de rotation et/ou de la fonction de pression de l'élément de réglage combiné (3.1).

2. Dispositif combiné d'affichage et de saisie (1) selon la revendication 1, **caractérisé en ce que** l'écran tactile est réalisé sous la forme d'un écran tactile résistif, capacitif ou inductif.

3. Dispositif combiné d'affichage et de saisie (1) selon la revendication 2, **caractérisé en ce que** les éléments de commande virtuels (2.1 à 2.6, 2.7, 2.8) sont disposés en différentes positions sur l'écran tactile, suivant la fonction sélectionnée.

4. Dispositif combiné d'affichage et de saisie (1) selon l'une des revendications précédentes, **caractérisé en ce que** la deuxième unité de saisie (3) physique comprend au moins une touche (3.2 à 3.8), un bouton de réglage rotatif et/ou un curseur de réglage.

5. Dispositif combiné d'affichage et de saisie (1) selon l'une des revendications précédentes, **caractérisé en ce que** les fonctions peuvent être sélectionnées dans un menu principal à l'aide de la deuxième unité de saisie (3) et des fonctions secondaires et/ou les valeurs de consigne associées peuvent être réglées dans au moins un sous-menu à l'aide de la première unité de saisie (2).

6. Dispositif combiné d'affichage et de saisie (1) selon l'une des revendications précédentes, **caractérisé en ce que** plusieurs fonctions et/ou valeurs de consigne peuvent être affichées simultanément et/ou plusieurs valeurs de consigne d'une ou plusieurs fonctions peuvent être réglées simultanément.

7. Dispositif combiné d'affichage et de saisie (1) selon l'une des revendications précédentes, **caractérisé en ce que** les fonctions sont
- des fonctions du système de climatisation,
- des fonctions de commande de l'électronique de divertissement,
- des fonctions de commande d'un dispositif de communication,
- des fonctions de commande d'un dispositif de navigation,
- des fonctions de commande d'un groupe propulseur du véhicule,
- des fonctions de commande d'une chaîne cinématique du véhicule,
- des fonctions de commande d'un éclairage du véhicule et/ou
- des fonctions de commande d'équipements de confort du véhicule.
